# EUROPEAN PATENT APPLICATION

(11) **EP 0 933 859 A1**
(43) Date of publication of application: **04.08.1999**
(21) Application number: 98200254.5
(22) Date of filing: 29.01.1998
(51) Int. Cl.: H02H 7/22, H02H 3/05

(54) **Electronic on-line control and monitoring system for high-voltage circuit breakers**

(71) Applicant: ABB ADDA S.p.A., 20075 Lodi (IT)
(72) Inventor: Lorito, Fabrizio, 20135 Milano (IT)
(74) Representative: Giavarini, Francesco

(57) **Abstract**

Electronic on-line control and monitoring system for high-voltage circuit breakers, the characteristic of which is that it comprises at least one controlling and monitoring section for acquiring data on a high voltage circuit breaker and for processing the data together with commands sent by the user, a user interface board for two-way communication with the controlling and monitoring section, and at least one command and signalling section interfaced with the controlling and monitoring section, the command and signalling section arranging for actuation of means for controlling opening and closing of said circuit breaker, so as to ensure that it opens or closes in accordance with the commands input through the user interface board and the acquired data.

## Description

The present invention relates to a control and monitoring system for high-voltage circuit breakers.

It is well known that high-voltage circuit breakers are used in all those situations where high level short circuit currents, such as those that may occur downstream of an electrical power station, upstream of a transmission line, have to be interrupted in extremely short times.

Circuit breakers are devices that, for grid switching or protection purposes, enable the various elements of a power installation (generators, lines, transformers, consumer loads) to be disconnected or connected. The action of these devices, which alters the structure of the system and, if the latter is stable, leads to the setting up of new operating conditions, involves transient phenomena that are generally very complex and even further complicated by arcing in the circuits, between the contacts of the operating circuit breaker.

The phenomenon of interrupting alternating current circuits depends substantially on the behaviour of the voltage between the contacts of the circuit breaker when a break is produced between its contacts: continuation or otherwise of the arc between the contacts (arc quenching) and also renewal or otherwise of the arc depend on the behaviour of this "re-making" voltage.

High-voltage circuit breakers generally comprise three separate poles (in cases of three-phase lines) each assembled on its own support and connected together by link rods.

Assembled on the central support is the distribution board.

The circuit breaker controls are hydraulic type, provided with energy storage means in the form of a tank of precompressed nitrogen.

All circuit breaker open and close actions are triggered by the activation of a corresponding electromagnet with which the control system is provided.

Release of the energy stored in the storage means results in displacement of the movable parts of the circuit breaker.

The storage means generally comprise a tight cylinder and a piston separating two fluids: nitrogen and oil. The store is maintained under pressure by a high-pressure pump controlled by the contacts of a pressure circuit breaker.

The energy produced by a rapid but partial expansion of the compressed nitrogen is hydraulically transmitted to the jacks of the circuit breaker via a valve.

As stated all the hydraulic and electrical components are comprised in a single distribution board mounted on the support of the central pole.

Accordingly, in the current art, the system for controlling a high-voltage circuit breaker required to operate with voltages ranging from 145 to 170 kV and with currents in the region of 1250-3150 A is of the electromechanical kind, i.e. is based on relays adapted for opening or closing the circuit breaker contacts.

The widely used relay logic has, however, various drawbacks.

Firstly, the relay logic requires a considerable amount of wiring; as a result, the dimensions of the distribution board are necessarily quite large.

Furthermore, this type of logic lacks flexibility in the sense that the functions that can be performed by the logic are rigid, predefined and cannot be altered by a user wishing to add other, customised functions.

Additionally, the relay logic performs solely control functions (circuit breaker actuation), without having the ability to perform monitoring of the circuit breaker in order to detect possible failure situations in advance.

Finally, the large amount of wiring entails a propensity to failures that jeopardizes reliability of the circuit breaker.

The primary object of the present invention is therefore that of providing an electronic control and monitoring system for a high-voltage circuit breaker, that is capable of actuating the circuit breaker and of continuously monitoring its condition.

As part of this overall object, one object of the present invention is that of providing a control and monitoring system for a high-voltage circuit breaker that is flexible in the functions it can perform.

A further object of the invention is that of providing a control and monitoring system for a high-voltage circuit breaker that is of smaller dimensions that the known electromechanical systems.

Another object of the invention is that of providing a control and monitoring system for a high-voltage circuit breaker that is flexible in the functions available to the user.

Yet another object of the invention is that of providing a control and monitoring system for a high-voltage circuit breaker having redundant elements for increasing operating reliability in the event of one part of the system being subject to a failure.

By no means the last object of this invention is that of providing a control and monitoring system that is extremely reliable, and relatively easy to build at competitive costs.

These and other objects that will become more apparent in the following are fulfilled by an electronic on-line control and monitoring system for high-voltage circuit breakers, characterized in that it comprises at least one controlling and monitoring section for acquiring data on a high-voltage circuit breaker and for processing said data together with commands sent by the user, a user interface board for two-way communication with said controlling and monitoring section, and at least one command and signalling section interfaced with said controlling and monitoring section, said command and signalling section arranging for actuation of means for controlling opening and closing of said circuit breaker, so as to ensure that it opens or closes in accordance with the commands input through said user interface board and the acquired data, and for signalling the status of the circuit breaker and any anomalies.

The objects stated above as well as others that will become more apparent in the following are also achieved by a process for the electronic control and monitoring of a high-voltage circuit breaker by means of a system as defined in Claim 1, characterized in that it comprises the following steps:
- acquiring data on a high-voltage circuit breaker by means of said at least one controlling and monitoring section;
- processing said data by means of said at least one controlling and monitoring section, together with commands sent by said user interface board; and
- sending said processed data and commands to said at least one command and signalling section for actuating of means for opening/closing said circuit breaker and for signalling the status of the circuit breaker and any anomalies to the user.

Further characteristics and advantages of this invention will become clearer from the following description of a preferred, but not exclusive, embodiment of the device according to the invention, illustrated indicatively and by no means exclusively in the accompanying drawings, where:
Fig. 1 is a general block diagram of the control and monitoring system according to this invention;
Fig. 2 is a detailed block diagram of the architecture of the control and monitoring system according to the invention;
Fig. 3 is a schematic perspective view of an example depicting a control cabinet containing the control and monitoring system according to the invention; and
Fig. 4 is a detailed block diagram of the user interface board illustrated in Fig. 2;
Fig. 5 is a detailed block diagram of the main board of the control and monitoring system, illustrated schematically in Fig. 2;
Fig. 6 is a detailed block diagram of the input/output (I/O) interface board depicted in Fig. 2;
Fig. 7 is a detailed block diagram of the mixing board depicted in Fig. 2;
Fig. 8 is a detailed block diagram of one of the plurality of output modules of the control and monitoring system illustrated in Fig. 2;
Fig. 9 is a detailed block diagram of one of the plurality of input modules of the control and monitoring system illustrated in Fig. 2; and
Fig. 10 is a block diagram illustrating the single configuration of the control and monitoring system according to the invention.

With reference to the figures cited, the control and monitoring system according to the present invention comprises a controlling and monitoring section 1 suitable for handshaking with an interfacing section 2 between the system and the user, and a command and signalling section 3 suitable for receiving command signals from the controlling and monitoring section 1, for effecting the desired actuations on a circuit breaker 4, for detecting signals from the circuit breaker through suitably located sensors and for signalling the status of the circuit breaker and any anomalies to the user.

The circuit breaker 4 is illustrated in three-phase configuration with the three main contacts 4a, 4b, 4c, one for each of the three phases (R, S and T).

The controlling and monitoring section 1 receives commands from the interfacing section 2 and signals from the sensors of the command and signalling section 3. The commands and the signals are processed by the controlling and monitoring section 1 and actuated by the command and signalling section 3 which, by way of actuators, activates the coils 4a, 4b and 4c of the circuit breaker 4.

The controlling and monitoring section 1 and the command and signalling section 3 are also bi-directionally interfaced with auxiliary circuits 5 comprising a command section of the motor 24 and an interface 180 for current transformers for measuring the current flow in each phase (R, S and T) of the circuit breaker 4.

A personal computer (PC) 6 may optionally be connected through a serial interface 7 to the user interface section 2 for reconfiguring the system and storing the data of the system.

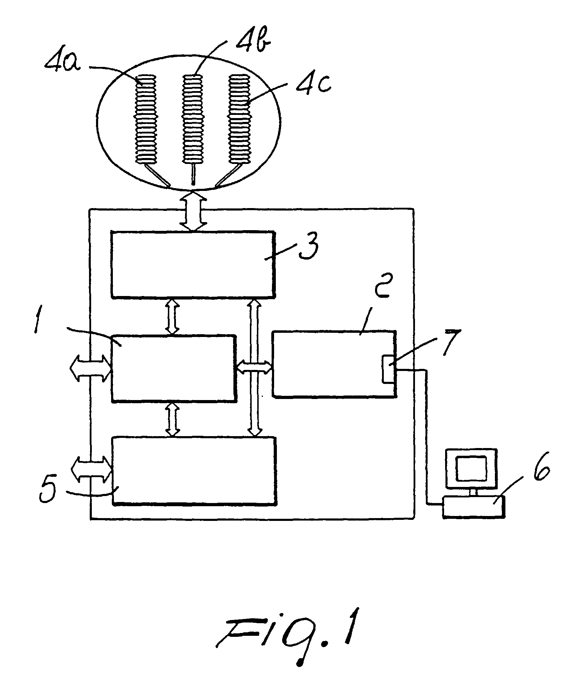

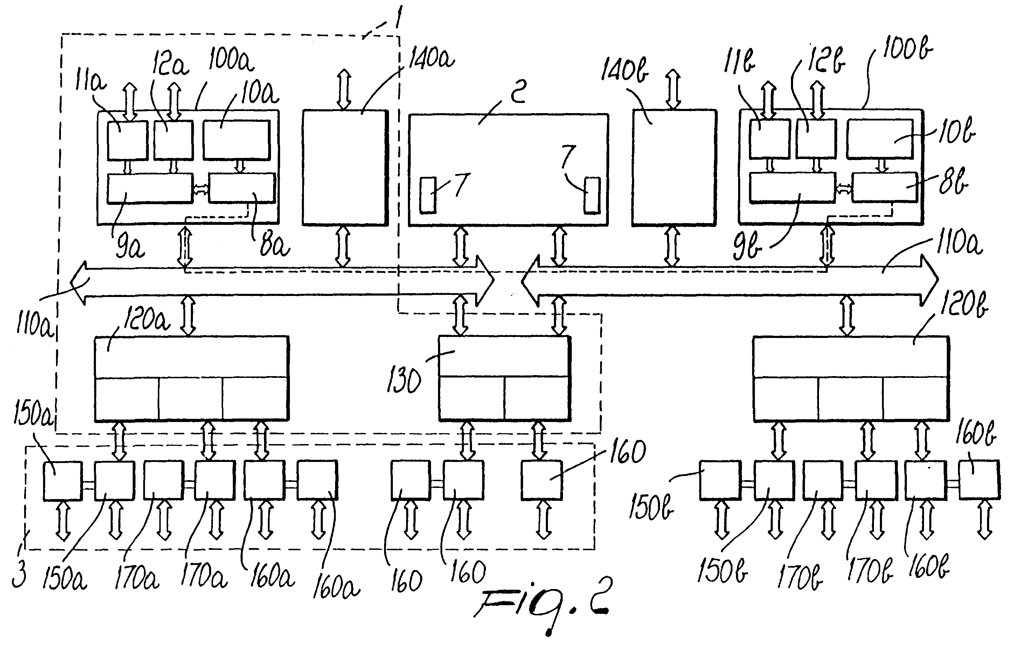

Fig. 2 depicts the detailed block diagram of an example of a configuration of the system according to the invention which is described more schematically in Fig. 1.

In all the figures, like reference numerals refer to like elements.

Fig. 2 depicts the configuration of the control and monitoring system according to the invention, in the redundant arrangement where the single configuration of the system (shown in Fig. 10) is repeated in mirror fashion so as to substantially duplicate the functions that may be executed by the single configuration, as well as adding new ones.

For the sake of simplicity of the description, details of implementation of the single configuration will now be explained, though with reference to Fig. 2. Each characteristic described for a system element having a counterpart (redundancy) is to be understood as applying to the latter as well.

For the first section of the system constituting the single configuration, reference numerals followed by the letter "a" will be used hereinbelow, whereas for the mirrored, redundant section, reference numerals followed by the letter "b" will be used. Reference numerals not followed by either of the above letters refer to elements that are common to both sections of the system, namely to non-redundant elements.

In Fig. 2 the auxiliary circuits 5 are not depicted.

The controlling and monitoring section 1 in Fig. 2 is shown to comprise at least one main controller board 100a which handshakes through a bus 110a with at least one input/output interface board 120a and with a mixing board 130 which effects a comparison of the signals from the bus 110a and from the redundant counterpart bus 110b which is part of the redundancy section, of which more later. Accordingly, the mixing board effects a comparison between the signals from the main controller boards 100a and 100b in order to verify consistency thereof and, in the event of a mismatch, to report failure of one of the two controller boards.

Power supply means 140a are adapted for driving the control and monitoring system according to the invention.

The command and signalling section 3 of Fig. 1 is shown in Fig. 2 as comprising a plurality of interfacing modules between the control and monitoring system and the circuit breaker 4. These modules are divided into a plurality of input modules (sensors) 150a, a plurality of actuating modules 160a and a plurality of modules 170a commanding opening/closing of the circuit breaker 4 and detecting continuity of the trip coils.

The number of modules 170a depends on the number of poles of the circuit breaker 4. More specifically, there are three coils, 4a, 4b and 4c, one for each pole (R, S and T), both for the opening command and for the closing command, so that there are a total of 6 trip coils (there are also three trip coils in the redundant section, intended for opening the circuit breaker which is the most critical function and for which it is desirable to arrange for redundancy).

The interfacing section 2 represents the interface between the local user and the system according to the invention and is designed for sending and receiving data via the buses 110a and 110b and is provided with at least one serial port 7 for data communication. In the case of a redundant configuration system, the serial ports 7 are two in number, 7a and 7b.

The main controller board 100a comprises at least one microcontroller 8a connected to digital signal processing means 9a and to the supervision circuits 10a.

To advantage, the digital signal processing means 9a could, for example, consist of a DSP (Digital Signal Processor) provided with an internal memory and adapted for addressing an external memory.

The two buses 110a and 110b, present where the system configuration has redundancy, are connected together by a single wire which sets the two microcontrollers 8a and 8b of the main controller boards 100a and 100b directly in communication with each other.

Connected to the digital signal processing means 9a are a plurality of analogue inputs 11a and 12a, having the tasks of measuring the current in the three phases (R, S and T) of the circuit breaker 4, measuring the pressure of the oil in the actuator for opening and closing of the circuit breaker and measuring the position of the actuation piston.

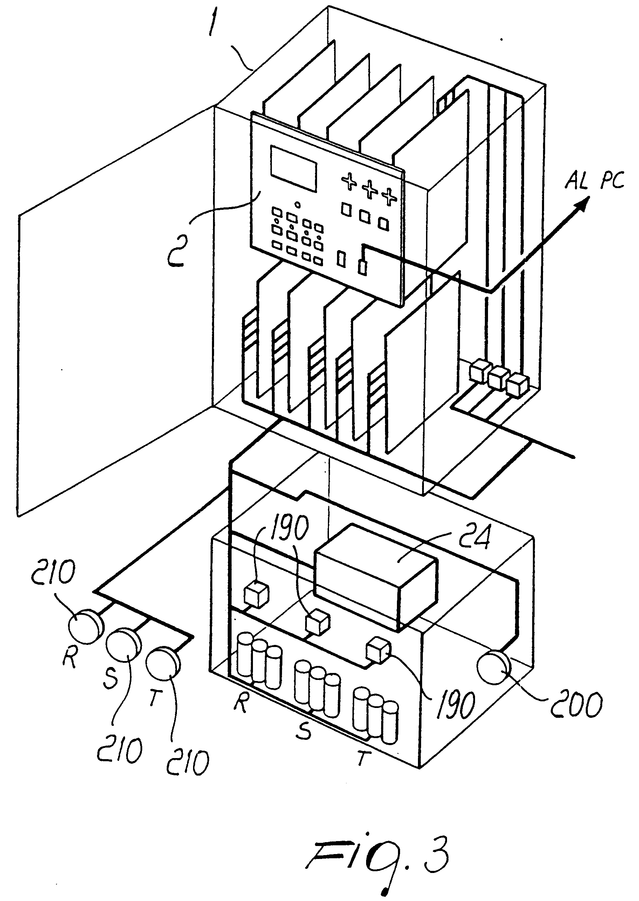

The corresponding sensors for measuring the abovementioned variables are depicted in Fig. 3 and are, in particular, the position sensors 190, one for each of the three phases, the oil pressure sensor 200 and the sensors 210 of the density of the SF6 gas in the circuit breaker 4.

Function of the analogue inputs 12a is that of supplying the system with information similar to that just described, with the difference that sensors are provided that are made so as to detect continuously the variables in question. Further, some of these analogue channels may be arranged so as to be sensitive to the exceeding of predetermined thresholds. In practice, the circuit breakering of fixed threshold contacts results in the variables concerned reaching a certain value.

The input/output interface board 120a (and similarly, the board 120b) controls communication of the control and monitoring system according to the invention with the outside world. In particular, the interface board 120a enables two-way communication of data with the input modules 150a, the output modules 160a and the modules actuating the trip coils of the solenoid valves commanding opening and closing of the circuit breaker 4.

In the description of the control system according to this invention, reference will be made to solenoid valves simply as one illustrative embodiment of a range of actuation devices that may be described more generally as electroactuators, that is to say any electrically actuated system which activates the mechanisms that produce opening and/or closing of the circuit breaker.

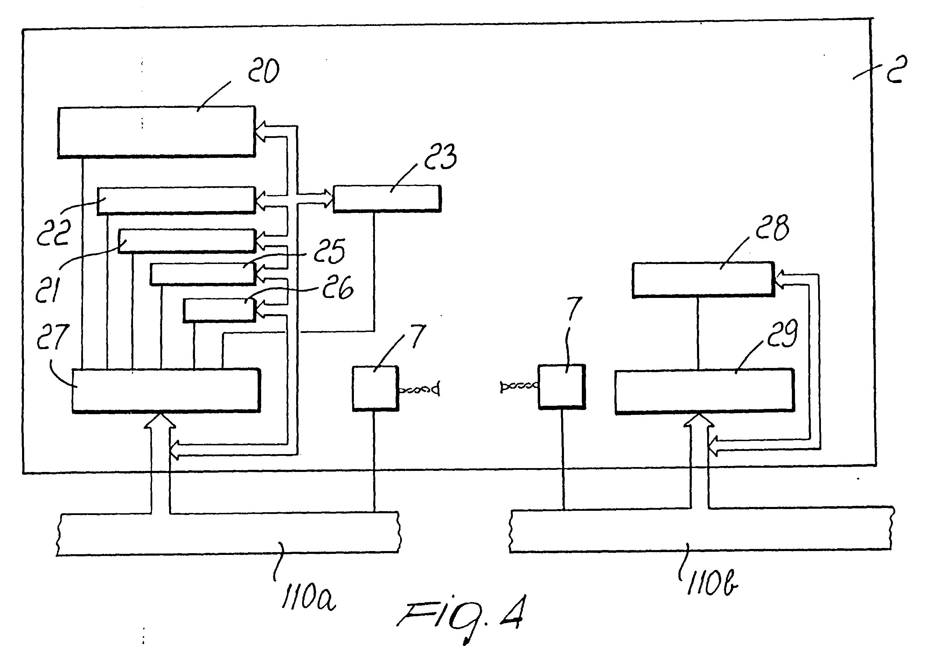

With reference now to figures 4 to 9, the elements comprising the control and monitoring system according to the invention illustrated in Fig. 2 will be described in detail.

In all of these figures, reference numerals will be used without any letter adjoined since the individual elements of one portion of the system are similar to the corresponding ones of the redundant portion of the system.

Fig. 4 illustrates in block diagram form the configuration of the user interface board 2.

In greater detail, this board has allowance for a liquid crystal display 20, a plurality of push-buttons 21 for command and monitoring and associated LEDs 22 for indicating the selected function and for alarms; a plurality of LEDs 23 indicating status of the circuit breaker 4; a selector 25 enabling/disabling the compressor of the oil in the pistons actuating the contacts of the circuit breaker (driven by the solenoid valves) and the associated motor 24 of the compressor; a key 26 for selecting local or remote operation; first decoding/coupling means 27 (latch) suitable for controlling the abovementioned elements and for handshaking with the bus 110a for transmitting/receiving data to/from the main controller board 100a.

The board also has provision for a serial interface 7a for exchanging data with a PC.

Also included in the case of a redundant configuration are a circuit opening push-button 28 acting on the redundant section of the system and second decoding means 29 connected to the bus 110b and suitable for transmitting/receiving data to/from the main controller board 100b and a second serial interface 7b.

A temperature sensor (not depicted) is also mounted on the user interface board 2.

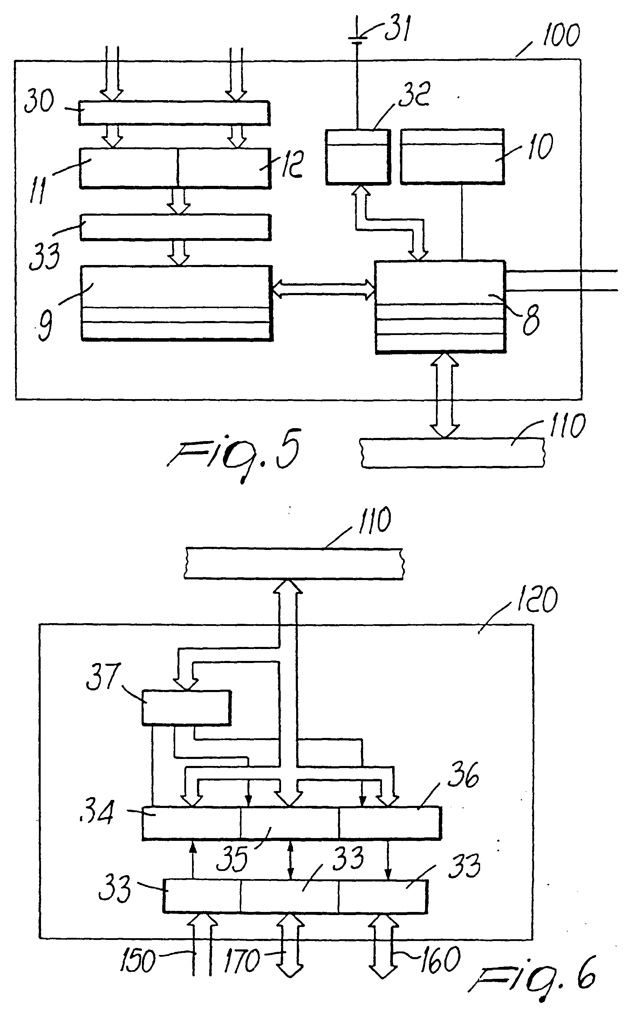

Fig. 5 illustrates in block diagram form the configuration of the main controller board 100 (both 100a and 100b).

The inputs received from the field, namely data acquired from the circuit breaker 4 through sensors, are first filtered by an EMC filter bed 30 before being converted from analogue to digital by converters (for the analogue inputs 11) 33 which are then connected to the DSP 9.

The DSP 9 may, for example, comprise suitably programmed ROM and PROM memories.

The microcontroller 8 is connected directly to the DSP 9 and comprises, for example, suitably programmed RAM, FLASH and ROM memories.

The microcontroller 8 communicates with the bus 110 and with the DSP and these monitor each other by means of an internal supervision circuit (not depicted); a further, external supervision circuit 10 (watch-dog) monitors the microprocessor 8.

A Real Time Clock 32 is connected to the microcontroller 8.

Finally, an external battery 31 ensures continued power supply in the event of temporary black-out and consequent inoperativity of the power supply means 140.

Fig. 6 illustrates in block diagram form the input/output interface board 120 (both 120a and 120b).

This board comprises an array of buffers 33, one each for holding in memory the data from the input modules 150, the output modules 160 and the modules for controlling and checking the coils 170.

The buffers 33 transmit data respectively to latches 34 for the input modules 150, latches 35 for the modules 170 and latches 36 for the output modules 160.

The latching circuits 34, 35 and 36 are connected directly to the bus 110 and to decoding means 37, also connected directly to the bus 110.

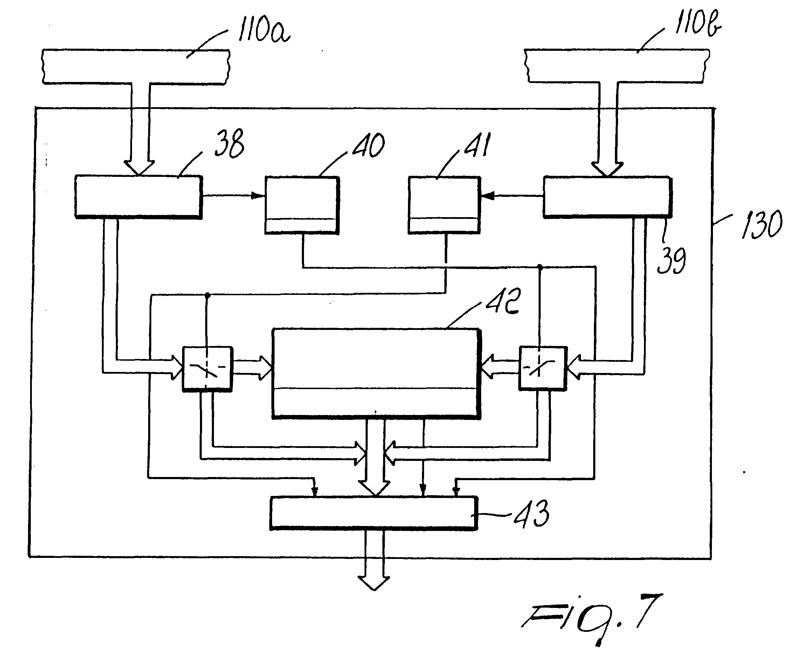

Fig. 7 shows as a block diagram the configuration of the mixing board 130 which effects a comparison between the signals coming from the first portion of the system and from its redundant portion and has the important function of verifying that the main controller boards 100a and 100b are working properly so as to be able to drive the intervention of the redundant part of the system when the main part is subject to failure, or vice versa.

If the signals coming simultaneously from the two main controller boards 100a and 100b are matching, then the signal is transmitted to the output; if they are not, an alarm is generated and the system is locked in the configuration prior to this anomaly situation.

Since the redundant part of the system effects most of the functions (namely, the most important functions for which a high degree of reliability is required) of the main part, as well as some additional functions, in reality the redundant part is constantly operative, independently of whether there is a failure of the main part.

The mixing board 130 is powered, for additional operating safety, by both the power supply means 140a and 140b.

This board comprises a first latch 38 and a second latch 39 connected to the bus 110a and to the bus 110b, respectively, for obtaining data from the two buses; first and second controlling means, 40 and 41, suitable for controlling operation of the microcontrollers 8a and 8b respectively and connected to the latches 38 and 39.

The controlling means 40 and 41 are adapted to issue a signal indicating failure of the microcontroller 8a and a signal indicating failure of the microcontroller 8b, respectively.

The respective signals output by the controlling means 40 and 41 are sent, together with the signals output by the latches 38 and 39, to comparing means 42 which effect a comparison between the two signals coming from the main part and from the redundant part of the system.

If the result of the comparison indicates diversity of operation between main part and redundant part, then there will be acquisition of the data currently present in the latches 38 and 39. In the case of the contrary result, the data present in the latches at the previous step are frozen and an error signal is generated at the same time.

Where it is possible to recognize which of the two controller boards is defective, the defective main controller board 100 is automatically disconnected from the system and control is assumed by the other main controller board 100.

Connected to the comparing means 42 is a buffer 43.

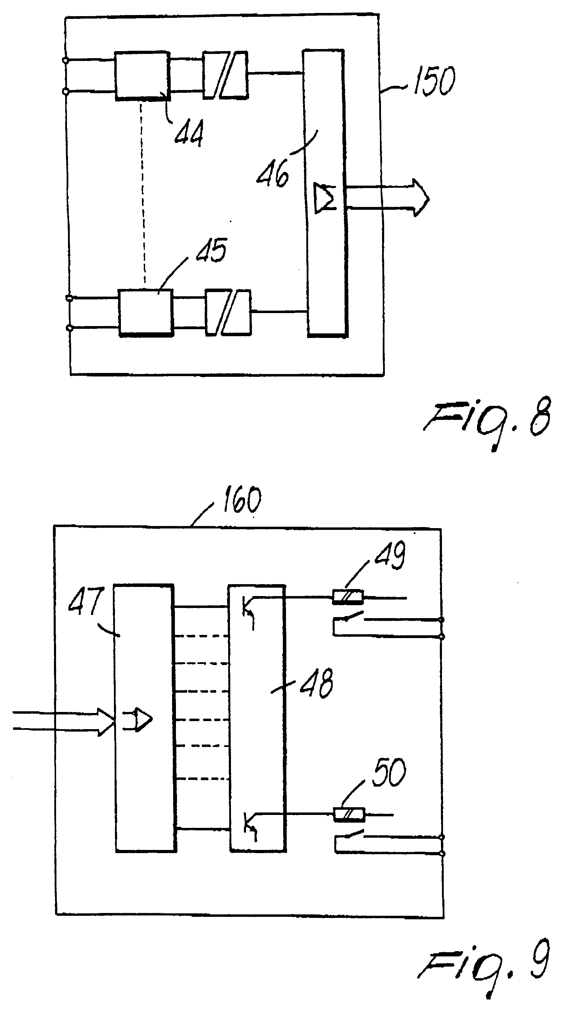

Fig. 8 illustrates in block diagram form configuration of one of the plurality of input modules 150 (150a and 150b).

Each of these modules has a multiple number of field input channels, i.e. channels for the acquisition of data coming from external sensors arranged for monitoring the status of the circuit breaker 4.

The signals input to the module 150 are filtered in advance by at least one EMC filter 44 (two EMC filters 44 and 45 are shown in the figure) and are then sent to a buffer 46 for transmission to the input/output interface board 120.

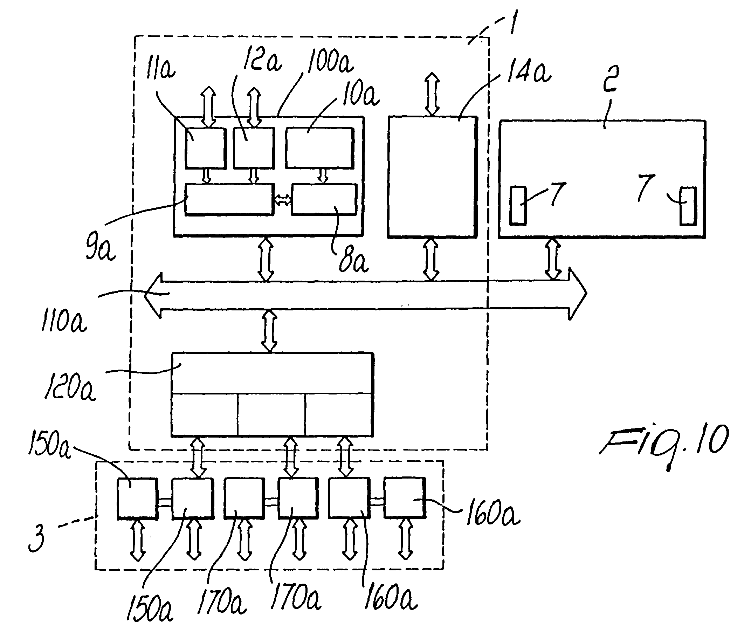

Fig. 9 illustrates in block diagram form configuration of one of the plurality of output modules 160 (connected both to the input/output interface boards 120a and 120b and to the mixing board 130).

This module comprises a buffer 47 connected to a driver 48, the outputs of which drive a series of relays (only two relays 49 and 50 are shown in the figure), corresponding in number to the number of data acquisition channels of the module 160.

With reference to the abovementioned figures, operation of the electronic control and monitoring system according to the invention is as follows.

The control and monitoring system according to the invention is designed to perform real time control of a high-voltage circuit breaker, and monitoring of its status so as to verify its condition (for example, open status and closed status).

The configuration chosen for the system is the modular type where use is envisaged of two symmetrical system portions such that the functions that can be effected by a first portion may also be effected by a second portion, thereby guaranteeing a high level of system reliability.

The most important command in the case in question is the open command that must be sent in as brief a time as possible should an operating anomaly occur, in order to avoid hazards.

Accordingly this command to open the circuit breaker is duplicated, that is, it is to be found in both of the system portions, whereas the close command is found in one only of the two parts.

Naturally it is also easily possible to duplicate the close command in view of the system's modularity, without necessarily having to change the configuration shown in Fig. 2.

Fig. 2 accordingly depicts the system maximum configuration, wherein redundancy of the system elements, and hence of its functions, is provided. However, it must be pointed out that it is possible for the system to operate with just a single controlling section 1 and a single command and signalling section 3, together with a user interface board 2.

In Fig. 2, the configuration depicted therefore uses two controlling and monitoring sections each comprising a controller board 100 which in turn comprises a microcontroller 8 connected to an independent bus 110 with independent power supply 140. This duplication is provided primarily to give two completely independent opening circuits.

Each controller board 100 directly controls a set of inputs and outputs. The two boards 100 are connected together by a serial link 110 (bus 110a and 110b).

The communication protocol is master/slave type.

The Real Time Clock 32 present on each of the controller boards 100a and 100b is capable of monitoring the board power supply voltage by comparing it with the voltage produced by the external battery 31.

In particular, the two microcontrollers 8a and 8b are connected together directly, for reciprocal control of operation.

Inside each controller board, cross-checks are made between the microcontroller 8 and the DSP 9 (by an internal watch-dog) and between the supervision circuits 10 (watch-dogs) and the microcontroller 8.

Cross-checking between the microcontroller 8 and the DSP is effected by way of the reciprocal sending of signals at regular intervals.

The DSP 9 has the task of controlling data acquisition through the analogue inputs 11 with which the main controller board 100 is provided. Some of the analogue inputs may also be used as digital inputs and are indicated in the figures with the reference numeral 12.

Function of the mixing board 130 (one for the whole system) is that of comparing data sequences produced in parallel by each controlling and monitoring section 1 of the system and of then outputting the most probable configuration of the data. Another function it has is to monitor the activity of the two controlling and monitoring sections and to establish whether there is a malfunction in at least one system.

To this end, the board 130 compares the data on the two controlling and monitoring sections 1, taking into account malfunctions diagnosed in at least one of the sections, power supply absent in at least one of the sections and differences in data processed between the two sections.

The control functions performed by the system according to the invention are those of opening and closing the circuit breaker 4 under conditions of normal operation and of controlling the circuit breaker under malfunction conditions.

The main purpose of the closing function is that of enabling or disabling the solenoid valves used for opening/closing the contacts of the circuit breaker 4 by acting on the coils 4a, 4b and 4c (one for each phase, three therefore in cases of three-phase circuit breakers).

The system according to the invention receives data "from the field" concerning density of the SF6 gas, pressure of the oil and status of the circuit breaker 4 (open or closed), which are acquired by the system together with data sent from the user interface 2.

If the gas density and oil pressure checks show values below the minimum thresholds, the microcontroller 8 inhibits any form of operation on the solenoid valves.

On the other hand, if the circuit breaker 4 is open and there is a closing command, either local or remote, the coils 4a-4c intended for commanding the solenoid valves opening the circuit breaker are energized.

The sequence of the opening function is identical.

The command modules 170 for opening and closing the coils allow for the possibility of receiving remote commands sent by the user for opening and closing the circuit breaker and are also empowered with the function of monitoring the continuity of the trip coils 4a-4c.

More specifically, detection of continuity is made by injecting a signal produced by a transformer-oscillator into the coil. The signal is detected by the coil and decoupled by an optoisolator, filtered and transmitted in differential mode to the input/output board 120.

The system's monitoring function enables data "from the field" to be detected and stored in a data base for maintenance planning purposes, and for observing behaviour of the circuit breaker during normal operation in order to prevent hazard situations arising.

Abnormal conditions are recorded in an abnormal events data base and are associated with alarms having different priority levels.

It has been observed in practice how the electronic control and monitoring system according to this invention fully achieves its intended object as it enables control and monitoring of a high-voltage circuit breaker to be performed automatically and electronically, thereby dispensing with the need for a rigid relay logic as used in the known type control systems.

In addition, the possibility of performing monitoring true and proper of the status of the circuit breaker and of the continuity of the coils, together with similar functions, that comes from having electronic control, means that more functions are made available to the user.

The dimensions of the control system according to this invention are also much smaller than those of the known type systems, which makes for easier installation and maintenance.

Numerous changes and variants may be made to the system thus designed, all within the scope of the concept of the invention.

For example, the system may be configured differently from what is illustrated in Fig. 1. In particular, operation of the system is guaranteed even with the single configuration comprising a single controlling and monitoring section 1 and a single command section 3, together with a user interface board 2.

It is also possible to configure the system to monitor only circuit breaker status, therefore using only the controlling and monitoring section 1 and the user interface section 2.

As may be seen from the above, the modularity of the system according to this invention enables selection of the most suitable configuration for the user without having to alter the basic architecture.

Finally, all of the details may be replaced by other technically equivalent elements.

As stated earlier, the controlling solenoid valves referred to are simply one example of the possible types of electrical actuator that may be used to perform the operations of opening/closing the circuit breaker, controlled by the system according to this invention.

In practice, provided they are compatible with the specific application, any kind and dimensions of materials may be used according to the requirements and the state of the art.

Where the technical characteristics of the claims are followed by reference numerals and/or letters, said reference numerals and/or letters have been added solely for the purpose of increasing comprehensibility of the claims and accordingly said reference numerals and/or letters do not have any effect on the scope of each element identified purely by way of indication by said reference numerals and/or letters.

## Claims

1. Electronic on-line control and monitoring system for high-voltage circuit breakers, characterized in that it comprises at least one controlling and monitoring section for acquiring data on a high-voltage circuit breaker and for processing said data together with commands sent by the user, a user interface board for two-way communication with said controlling and monitoring section, and at least one command and signalling section interfaced with said controlling and monitoring section, said command and signalling section arranging for actuation of means for controlling opening and closing of said circuit breaker, so as to ensure that it opens or closes in accordance with the commands input through said user interface board and the acquired data.

2. Electronic control and monitoring system according to Claim 1, characterized in that it comprises two identical controlling and monitoring sections interfaced with said user interface board, each of said two controlling sections driving a respective command and signalling section for actuation of said circuit breaker.

3. Electronic control and monitoring system according to Claim 1, characterized in that said at least one controlling and monitoring section comprises at least one main controller board interfaced bi-directionally with said user interface board, power supply means, at least one bus for the two-way communication of said main controller board with said user interface board, and at least one input/output interface board for the interfacing with said command section, said at least one input/output interface board being connected to said at least one bus.

4. Electronic control and monitoring system according to Claim 1, characterized in that said command and signalling section comprises:
- a plurality of input modules, said input modules comprising sensors;
- a plurality of output modules, said output modules comprising actuators; and
- a plurality of modules commanding actuation of said opening/closing means, said command modules comprising both sensors and actuators and also detecting the status of said circuit breaker.

5. Electronic control and monitoring system according to Claim 2, characterized in that it comprises a mixing board suitable for comparing the signals coming from said two main controller boards and for verifying that they are matching, said mixing board being connected to two buses, to which a pair of main controller boards is in turn connected.

6. Electronic control and monitoring system according to Claim 5, characterized in that said mixing board is interfaced with a plurality of output modules for signalling to the user, said plurality of output modules comprising modules for verifying continuity of said opening/closing means, said opening/closing means comprising trip coils for solenoid valves having the functions of opening and closing said circuit breaker.

7. Electronic control and monitoring system according to Claim 5, characterized in that it comprises a pair of power supplies adapted for parallel power supply to said mixing board.

8. Electronic control and monitoring system according to Claim 3, characterized in that said at least one main controller board comprises at least one microcontroller connected bi-directionally to a digital signal processor, supervision circuits adapted for controlling the operation of said microcontroller and a plurality of analogue and digital inputs for the acquisition of data from said circuit breaker, said analogue and digital inputs being connected to said digital signal processor.

9. Electronic control and monitoring system according to Claim 1, characterized in that said user interface board is provided with at least one serial port for connection to a computer.

10. Electronic control and monitoring system according to Claim 1, characterized in that said user interface board is provided with means for enabling/disabling the system local control, and with a display unit and push-buttons for actuation of the system functions.

11. Electronic control and monitoring system according to Claim 2, characterized in that said two controlling and monitoring sections each comprise:
- a microcontroller, said microcontrollers being suitable for handshaking with one another so as to carry out reciprocal control of operation and exchange of data; and
- at least one input/output interface board, each of said interface boards being connected to a plurality of input, output and command modules, the commands for opening said circuit breaker being included in each of said two controlling sections.

12. Process for the control and monitoring of a high-voltage circuit breaker by means of a system as defined in Claim 1, characterized in that it comprises the following steps:
- acquiring data on a high-voltage circuit breaker by means of said at least one controlling and monitoring section;
- processing said data by means of said at least one controlling section, together with commands sent by said user interface board; and
- sending said processed data and commands to said at least one command and signalling section for actuation of means for opening/closing said circuit breaker and for signalling the status of the circuit breaker and any failures to the user.

13. Process according to Claim 12, characterized in that said step of processing data and commands includes a step of comparing the data processed by two identical controlling and monitoring sections in order to check for diversity of operation and/or system anomalies, said comparing step being effected by a mixing board suitable for controlling and for detecting incorrect operation of each controlling section, and for excluding from the system the temporarily failed controlling section.

14. Process according to Claim 12, characterized in that said step of aquiring data in said high-voltage circuit breaker is effected by a plurality of data acquisition inputs.

15. Process according to Claim 13, characterized in that a first of said two controlling and monitoring sections is suitable for autonomously controlling said circuit breaker, the second controlling section replicating the functions which said first controlling section is able to perform.

16. Process according to Claim 12, characterized in that the step of sending commands to said command and signalling section is effected by at least one interface board placed between at least one connecting bus and said at least one command section.

17. Process according to Claim 13, characterized in that each of said two controlling and monitoring sections comprises at least one microcontroller, the microcontroller of one controller board exchanging data with the microcontroller of the other board for controlling the system and for making a cross-check of the respective mode of operation.

18. Monitoring system for a high-voltage circuit breaker characterized in that it comprises at least one controlling and monitoring section for acquiring data on high-voltage circuit breaker, and a user interface board for two-way communication with said controlling and monitoring section, said user interface board being adapted for displaying to the user the operating status of the high-voltage circuit breaker detected by said controlling and monitoring section.
